# EUROPÄISCHE PATENTSCHRIFT

(11) **EP 1 621 327 B1**
(45) Veröffentlichungstag und Bekanntmachung des Hinweises auf die Patenterteilung: **10.10.2007**
(21) Anmeldenummer: 05104969.0
(22) Anmeldetag: 08.06.2005
(51) Int. Cl.: B29D 30/32, B29D 30/24

(54) **Verfahren und Vorrichtung zum Aufbau einer Reifenkarkasse eines Reifenrohlings**
Method and apparatus for manufacturing a tyre carcass of a green tire
Procédé et dispositif de fabrication d'une carcasse d'un pneu cru

(30) Priorität: 28.07.2004 DE 102004036516
(43) Veröffentlichungstag der Anmeldung: 01.02.2006
(73) Patentinhaber: Continental Aktiengesellschaft, 30165 Hannover (DE)
(72) Erfinder: Döring, Werner, 30823, Garbsen (DE); Winkler, Jens, 30173, Hannover (DE)

(56) Entgegenhaltungen:
- EP-A- 0 206 693
- EP-A- 0 770 475
- DE-A1- 2 545 381
- DE-B- 1 201 978
- SU-A1- 1 618 670
- US-A- 4 244 770
- US-A1- 2003 234 081

## Beschreibung

Die Erfindung betrifft ein Verfahren zum Aufbau einer Reifenkarkasse eines Reifenrohlings auf einer aus mehreren ein- und ausfahrbaren Segmenten bestehenden Reifenaufbautrommel und unter Verwendung von zwei seitlich dieser angeordneten, aufblähbare Bälge tragenden Balgträgern, wobei auf die Reifenaufbautrommel eine Innenseele und zumindest eine, über die seitlichen Ränder der Aufbautrommel hinaus ragende Überstände aufweisende Karkasseinlage aufgelegt werden, die Aufbautrommel expandiert wird, die Überstände gegebenenfalls angerollt werden, auf den Überständen vorgefertigte Wulstkerne positioniert werden und diese durch ein Aufblähen der Bälge umgeschlagen werden.

Die Erfindung betrifft ferner eine Vorrichtung zum Aufbau einer Reifenkarkasse eines Reifenrohlings, welcher eine Innenseele, zumindest eine Karkasseinlage, Wulstkerne und um diese geschlagene, Hochschläge bildende Abschnitte der Karkasseinlage aufweist, wobei die Vorrichtung eine radial expandierbare, aus mehreren Segmenten bestehende Reifenaufbautrommel und seitlich derselben angeordnete Balgträger mit aufblähbaren Bälgen aufweist.

Aus der DE 1 201 978 B ist eine Reifenaufbaumaschine mit einer im Durchmesser vergrößerbaren Mitteltrommel und koaxial nebengeordneten Seitentrommeln sowie mit zugeordneten, die Seitentrommel übergreifenden, axial bewegbaren Rundschiebem bekannt. An den äußeren Umfangswandungen der Seitentrommeln sind ringartige Kanäle für Druckluft und an den inneren Umfangswandungen der der Mitteltrommel zugewandten Enden der Rundschieber den ringförmigen Kanälen der Seitentrommeln zugeordnete Saugluftdüsenringe angeordnet. Durch diese Saugluftdüsen soll das Gewebe der Karkasseneinlagen einwandfrei über die Wulstkeme gefaltet werden, ohne dass Verzerrungen und Insichfaltungen des Reifenkordgewebes stattfinden.

Die EP-A-0 206 693 betrifft eine Reifenaufbaumaschine mit einer drehbaren Aufbautrommel und zwei seitlich zu dieser angeordneten, aufblähbare Bälge aufweisenden Balgträgem. Es sind seitliche Trommelansätze vorgesehen, welche in ihrer Betriebslage die seitlichen Balganordnungen überdecken und das auf die Trommel aufzubringende Material unterstützen.

Aus der US 2003/234081 A1 ist eine Reifenaufbaumaschine bekannt, welche Schulterteile aufweist, die in axialer und radialer Richtung zwischen einer eingefahrenen Position der Trommel, in welcher deren Außenfläche ihren geringsten Durchmesser und ihre geringste axiale Erstreckung aufweist, und eine Arbeitsposition, in welcher der Durchmesser und die axiale Länge der Außenfläche wesentlich größer sind, bewegbar sind. Die Schulterteile sind an ihren Unterseiten über Bohrungen mit Unterdruck beaufschlagbar.

Es ist ferner bekannt und üblich, zum Aufbau von Reifenrohlingen für Radialreifen einstufige oder zweistufige Reifenaufbaumaschinen zu verwenden. Bekannt sind beispielsweise Reifenaufbaumaschinen, die nach dem Finger-Ply-Down-Verfahren oder einem Expansionstrommelverfahren arbeiten. Bei einem zweistufigen Verfahren werden beispielsweise auf der erste Stufe der Reifenaufbaumaschine auf eine einen zylindrischen Außenumfang aufweisende, expandierbare Reifenaufbautrommel die Reifeninnenseele und anschließend die Karkasseinlagen aufgelegt und gespleißt. Bei expandierter Trommel werden die Wulstkerne, die meist mitsamt Kernprofilen vorgefertigte Ringe sind, auf die Überstände der Karkasseinlage gesetzt. Es folgt der Umschlag der die Reifenaufbautrommel seitlich überragenden Überstände der Karkasseinlage um die Wulstkerne, was mit Hilfe der aufblähbaren Bälge durchgeführt wird. Nach dem Auflegen von gegebenenfalls weiteren Reifenbauteilen und dem Auflegen und Anrollen von Seitenwandprofilen ist die Reifenkarkasse fertiggestellt und wird von der nun wieder eingefahrenen Reifenaufbautrommel entfernt. Über eine Transfereinrichtung wird die Reifenkarkasse zu einer zweiten Reifenaufbautrommel transportiert. Auf einer gesonderten Gürteltrommel werden die Gürtellagen zum Gürtelverband komplettiert und anschließend ein ein- oder mehrteiliger Laufstreifen aufgebracht. Eine weitere Transfereinrichtung transportiert den Gürtel-Laufstreifen-Verband zur Reifenkarkasse und positioniert diesen über derselben. Durch Bombieren der Reifenkarkasse wird diese mit dem Gürtel-Laufstreifen-Verband zusammengefügt und durch Anrollen verbunden. Bei einem Einstufenverfahren erfolgen die Herstellung der Reifenkarkasse und die Fertigstellung des Rohreifens durch Komplettieren mit dem Gürtel-Laufstreifen-Verband auf einer einzigen Trommel.

Aus der DE 197 42 035 C1 ist ein weiteres Verfahren zum Aufbau eines Reifensrohlings bekannt. Auch dieses Verfahren arbeitet mit einer expandierbaren und aus mehreren Segmenten bestehenden Reifenaufbautrommel. Bei geringfügig expandierter Trommel werden einige Reifenbauteile aufgebracht, vorzugsweise beginnend mit den Seitenwänden, dem Innenliner, der ersten und danach gegebenenfalls der zweiten Karkasseinlage. Anschließend wird die Trommel radial wieder eingefahren, sodass die vorgefertigten Wulstkerne über die Trommel geschoben und axial positioniert werden können. In der Peripherie der Trommel sind sogenannte Negative angeordnet, die mit einer Evakuierpumpe verbunden sind. Wenn die Trommel zum Setzen der Wulstkerne eingefahren wird, wird ein Vakuum in den Negativen der Trommelperipherie erzeugt und mindestens bis zum Abschluss des Positionierens der Wulstkerne aufrecht erhalten. Auf diese Weise wird die Karkasseinlage während der eingefahrenen Lage der Trommel im Wesentlichen faltenfrei gehalten. Nach dem Überschieben und Positionieren der vorgefertigten Wulstkerne wird die Trommel wieder expandiert.

Bei dem eingangs genannten Verfahren sind Balgträger mit Bälgen vorgesehen, welche koaxial zur Rotationsachse der Reifenaufbautrommel angeordnet sind und im eingefallenen Zustand der Reifenaufbautrommel mit dieser eine im Wesentlichen einheitliche zylindrische Auflagefläche bilden. Insbesondere bei der Verwendung von steifen Karkasseinlagen, also vor allem bei Karkasseinlagen, die als Festigkeitsträger Stahlkorde enthalten, sind auch die seitlichen Überstände derart steif, dass sie sich beim Expandieren der Aufbautrommel nicht selbsttätig an die Abrundungen der Trommelschultern anpassen. Es ist jedoch erforderlich, dass die Überstände eine definierte Position seitlich der Schultern und auf den Bälgen einnehmen, um die vorgefertigten Wulstkerne genau positionieren zu können. Darüber hinaus ist es gerade bei steifen Karkasseinlagen besonders leicht möglich, dass sich beim Expandieren der Aufbautrommel im Bereich der Trommelschultern Lufteinschlüsse, sogar als regelrecht umlaufende Luftkanäle, bilden.

Der Erfindung liegt somit die Aufgabe zugrunde, ein Verfahren und eine Vorrichtung der eingangs genannten Art auf einfache Weise derart zu verbessern, dass das Anpassen von steiferen Karkasseinlagen im Bereich der Trommelschultern erleichtert wird und auch ein Abführen etwaiger Lufteinschlüsse ermöglicht ist.

Was das Verfahren betrifft, wird die gestellte Aufgabe erfindungsgemäß dadurch gelöst, dass nach dem Auflegen der Karkasseinlage an den Außenseiten der Schultern der Segmente der Reifenaufbautrommel zumindest an den Randbereichen der Segmente, axial innerhalb der schulterseitigen Abrundungen, über Bohrungen ein Unterdruck erzeugt wird, welcher zumindest während des Expandierens der Aufbautrommel aufrecht erhalten wird.

Was die Vorrichtung betrifft, wird die gestellte Aufgabe erfindungsgemäß dadurch gelöst, dass in den Schultern der Segmente der Reifenaufbautrommel zumindest an den Randbereichen der Segmente, axial innerhalb der schulterseitigen Abrundungen, eine Anzahl von durchgehenden Bohrungen vorgesehen ist, welche mit zumindest einer Vakuumpumpe in Verbindung sind.

Gemäß der Erfindung wird daher bei Karkasseinlagen aus einem steiferen Material ein Anlegen der Überstände an die Trommelschulterbereiche und die Balgoberseiten beim Expandieren der Aufbautrommel unterstützt, sodass anschließend die vorgefertigten Wulstkerne definiert positioniert werden können. anschließend die vorgefertigten Wulstkerne definiert positioniert werden können. Gleichzeitig ist die erfindungsgemäße Lösung mit dem Vorteil verbunden, dass etwaige Lufteinschlüsse, beispielsweise in den Reifenschultern umlaufende Luftkanäle, durch Absaugen der Luft zum Verschwinden gebracht werden.

Um das Entstehen von Lufteinschlüssen sicher zu verhindern, ist es von Vorteil, wenn der Unterdruck bereits vor dem Expandieren der Aufbautrommel aufgebracht wird. Der Unterdruck kann dabei relativ lange aufrechterhalten werden, wird jedoch spätestens nach dem Umschlagen der Überstände, dem Bilden der späteren Karkasshochschläge im Reifen, beendet.

Die Bohrungen in den Segmenten der Aufbautrommel werden zumindest zum Teil derart ausgerichtet, dass sie senkrecht zur Rotationsachse der Aufbautrommel verlaufen. Sie sind daher bereits zum Teil in jenen Randbereichen der Trommelsegmente ausgebildet, die an die schulterseitigen Abrundungen anschließen. Auch im Bereich der Abrundungen können senkrecht zur Rotationsachse angeordnete Bohrungen vorgesehen werden. Hier ist es jedoch eher von Vorteil, wenn die Bohrungen zumindest zum Teil derart ausgeführt sind, dass sie schräg durch die gerundeten Schultern verlaufen, um hier ihre Wirkung gut entfalten zu können.

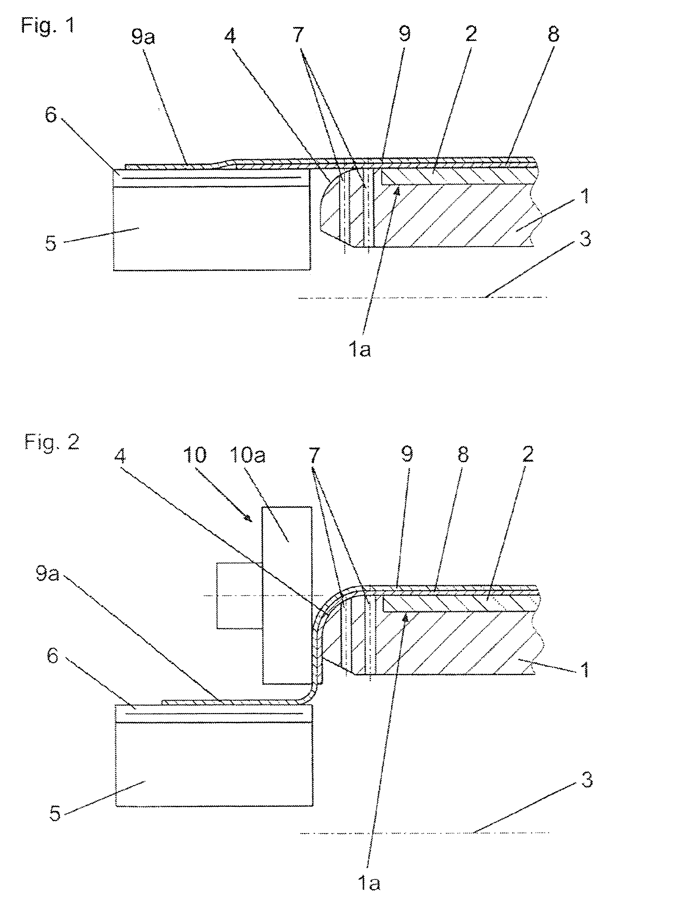

Weitere Merkmale, Vorteile und Einzelheiten der Erfindung werden nun anhand der schematischen Zeichnung, die ein Ausführungsbeispiel darstellt, näher beschrieben. Dabei zeigen Fig. 1 und Fig. 2 Ansichten eines Teils der erfindungsgemäßen Vorrichtung während aufeinanderfolgender Verfahrensschritte beim Aufbau eines Fahrzeugluftreifens.

Die Zeichnungsfiguren zeigen jeweils einen Schnitt durch die eine, hier die linke, Hälfte eines Trommelsegmentes 1 einer Reifenaufbautrommel, welche beispielsweise aus zwölf derartigen, in radialer Richtung aus- und einfahrbaren Metallsegmenten 1 besteht. Die Segmente 1 ergeben eine bezüglich der strichliert angedeuteten Achse 3 rotierbare zumindest im Wesentlichen zylindrische Trommel. Jene Mechanismen, mittels welcher die Trommelsegmente 1 zum gleichmäßigen Vergrößern und Verkleinern des Außendurchmessers der zylindrischen Auflagefläche der Reifenaufbautrommel betätigbar sind, sind nicht dargestellt, können herkömmlich ausgeführt sein und sind daher auch nicht gesondert beschrieben. Am äußeren Umfang der Trommelsegmente 1 ist eine Gummihülle 2 aufgebracht, welche ein funktioneller Bestandteil der Reifenaufbautrommel ist, da ihre äußere Oberfläche zugleich die Peripherie der Trommel bildet. Die Gummihülle 2 überdeckt die sich beim Ausfahren der Segmente 1 zwischen diesen bildenden Spalten. Die Gummihülle 2 sitzt dabei in entsprechenden Vertiefungen 1a der Segmente 1, welche sich über einen Großteil der Breite der Segmente 1 erstrecken, sodass die außen abgerundeten Trommelschultern 4 axial außerhalb der Vertiefungen 1a sind und die Peripherie der Gummihülle 2 mit dem Außenbereich der Trommelsegmentschultern 4 fluchtet und mit diesen gemeinsam eine im Wesentlichen (abgesehen von schulterseitigen Spalten beim Expandieren) einheitliche zylindrische Auflagefläche bildet. Seitlich der Reifenaufbautrommel ist jeweils ein Balgträger 5 mit einem auf ihm aufgebrachten, unaufgeblähten Gummibalg 6 vorgesehen, wobei die Figuren nur den linken Balgträger 5 zeigen. Auch die Balgträger 5 mit den Bälgen 6 sind rotationssymmetrisch zur Achse 3 angeordnet, ihre im Wesentlichen zylindrische Außenfläche befindet sich bei eingefahrenen Trommelsegmenten 1 auf dem gleichen Durchmesser wie die Außenfläche der Trommel. Gemäß der Erfindung sind die Trommelschultern 4 von einer Anzahl von Bohrungen 7 durchsetzt, welche insbesondere regelmäßig angeordnet sind und mit zumindest einer Vakuumpumpe, die ebenfalls nicht gezeigt ist, in Verbindung sind. Bei der dargestellten Ausführung verlaufen die Bohrungen 7 senkrecht zur Rotationsachse 3 der Reifenaufbautrommel. Es kann jedoch auch vorgesehen sein, zumindest einen Teil der Bohrungen 7 gegenüber der Rotationsachse 3 schräg nach außen verlaufend anzuordnen.

Zum Aufbau einer Reifenkarkasse eines Reifens wird bei nicht expandierter Trommel die Innenseele 8 des Reifens, die aus einer weitgehend luftdichten Kautschukmischung besteht, über den Umfang der Reifenaufbautrommel aufgelegt, ihre Endbereiche werden überlappend gespleißt. Anschließend wird zumindest eine Karkasseinlage 9, gegebenenfalls werden auch zwei Karkasseinlagen 9, aufgelegt und ebenfalls gespleißt. Karkasseinlagen für PKW-Reifen enthalten üblicherweise textile Festigkeitsträger oder Stahlkordfestigkeitsträger, Karkasseinlagen für LKW-Reifen Stahlkordfestigkeitsträger. Insbesondere Karkasseinlagen mit Stahlkorden als Festigkeitsträgern sind relativ steif, sodass beim Expandieren der Trommel insbesondere im Bereich der Schultern 4 der Trommelsegmente 1 zwischen der Innenseele 8 und der Außenfläche der Trommel Lufteinschlüsse, etwa umlaufende Luftkanäle, verbleiben können. Auch die bis auf die Oberseite der Bälge 6 reichenden Überstände 9a der Karkasseinlage 9 sind steif und unflexibel und passen sich der Kontur der Schultern 4 von selbst nicht an. Um qualitativ zufriedenstellende Reifen herzustellen, ist eine Abfuhr der Luft aus etwaigen Lufteinschlüssen bzw. Luftkanälen erforderlich. Ein exaktes Setzen der vorgefertigten Wulstkerne erfordert, dass sich die Überstände 9a der Karkasseinlage 9 weitgehend an die Rundungen der Schultern 4 angepasst haben.

Wird nun bereits vor dem oder während des Expandierens der Trommel über die Bohrungen 7 Unterdruck erzeugt, kann Luft aus etwaigen Luftkanälen bzw. Lufteinschlüssen entweichen und die Überstände 9a werden gegen die Schultern 4 gedrückt. Als zusätzliche Maßnahme kann vorgesehen werden, dass bei expandierter Trommel in jedem Schulterbereich je eine Anrolleinrichtung 10, welche beispielsweise eine drehbare Kunststoffrolle 10a aufweist, herangefahren wird, gegen den betreffenden Überstand 9a der Karkasseinlage 9 gedrückt wird und durch die Rotationsbewegung der Trommel den Überstand 9a über den Umfang der Karkasseinlage 9 abfährt. Diese Lage ist in Fig. 2 gezeigt. Anschließend werden die beiden Anrolleinrichtungen 10, von welchen nur die eine dargestellt ist, entfernt, die nicht gezeigten vorgefertigten Wulstkerne werden auf bekannte Weise auf die Überstände 9a gesetzt. Anschließend wird die Reifenkarkasse auf bekannte Weise weiter aufgebaut, indem die Bälge 6 aufgebläht werden und derart die Überstände 9a der Karkasseinlage 9 um die Wulstkerne geschlagen werden. Der Reifenrohling kann nun in an sich bekannter Weise fertig gestellt werden.

Spätestens nach dem Anrollen der Seitenwandprofile, insbesondere nach dem Umschlagen der Karkassenüberstände 9a, wird die Vakuumbeaufschlagung über die Bohrungen 7 beendet.

Es ist ferner vom Vorteil, wenn mit dem Ansaugen der Überstände 9a der Karkasseinlage 9 an die Schultern 4 spätestens dann begonnen wird, wenn der Expansionsvorgang der Trommel beginnt.

## Patentansprüche

1. Verfahren zum Aufbau einer Reifenkarkasse eines Reifenrohlings auf einer radial expandierbaren, aus mehreren ein- und ausfahrbaren Segmenten (1) bestehenden Reifenaufbautrommel und unter Verwendung von zwei seitlich dieser angeordneten, aufblähbare Bälge (6) tragenden Balgträgern (5), wobei auf die Reifenaufbautrommel eine Innenseele (8) und zumindest eine, über die seitlichen Ränder der Aufbautrommel hinaus ragende Überstände aufweisende Karkasseinlage (9) aufgelegt werden, die Aufbautrommel expandiert wird, die Überstände gegebenenfalls angerollt werden, auf den Überständen vorgefertigte Wulstkerne positioniert werden und die Überstände durch ein Aufblähen der Bälge (5) umgeschlagen werden,
**dadurch gekennzeichnet,**
**dass** nach dem Auflegen der Karkasseinlagen (9) an den Außenseiten der Schultern (4) der Segmente (1) der Reifenaufbautrommel zumindest an den Randbereichen der Segmente (1), axial innerhalb der schulterseitigen Abrundungen, über Bohrungen (7) ein Unterdruck erzeugt wird, welcher zumindest während des Expandierens der Aufbautrommel aufrecht erhalten wird.

2. Verfahren nach Anspruch 1, **dadurch gekennzeichnet, dass** der Unterdruck vor dem Expandieren der Aufbautrommel aufgebracht wird.

3. Verfahren nach Anspruch 1, **dadurch gekennzeichnet, dass** der Unterdruck spätestens nach dem Anrollen von Seitenwandprofilen, insbesondere nach dem Umschlagen der Überstände (9a), beendet wird.

4. Vorrichtung zum Aufbau einer Reifenkarkasse eines Reifenrohlings, welcher eine Innenseele (8), zumindest eine Karkasseinlage(9), Wulstkerne und um diese geschlagene, Hochschläge bildende Abschnitte der Karkasseinlage(9) aufweist, wobei die Vorrichtung eine radial expandierbare, aus mehreren Segmenten (1) bestehende Reifenaufbautrommel und seitlich derselben angeordnete Balgträger (5) mit aufblähbaren Bälgen (6) aufweist,
**dadurch gekennzeichnet,**
**dass** in den Schultern (4) der Segmente (1) der Reifenaufbautrommel zumindest an den Randbereichen der Segmente (1), axial innerhalb der schulterseitigen Abrundungen, eine Anzahl von durchgehenden Bohrungen (7) vorgesehen ist, welche mit zumindest einer Vakuumpumpe in Verbindung sind.

5. Vorrichtung nach Anspruch 4, **dadurch gekennzeichnet, dass** zumindest ein Teil der Bohrungen (7) senkrecht zur Rotationsachse (3) der Aufbautrommel verläuft.

6. Vorrichtung nach Anspruch 4, **dadurch gekennzeichnet, dass** zumindest ein Teil der Bohrungen (7) schräg zur Rotationsachse (3) und in die Schulterrundungen verläuft.

## Claims

1. Method of building a tyre carcass of a tyre blank on a radially expandable tyre building drum consisting of a plurality of retractable and extendable segments (1) and using two bellows supports (5) arranged laterally thereof and supporting inflatable bellows (6), an inner lining (8) and at least one carcass ply (9) with excess length projecting over the lateral edges of the tyre building drum being laid on the building drum, the building drum being expanded, the excess length being optionally rolled down, prefabricated bead cores being positioned on the excess length and the excess length being turned up by inflation of the bellows (6), **characterized in that**, after laying of the carcass plies (9) on the outer sides of the shoulders (4) of the segments (1) of the tyre building drum, a vacuum is generated at least at the edge areas of the segments (1), axially inside the shoulder-side rounded areas, via bores (7), which vacuum is maintained at least during expansion of the building drum.

2. Method according to Claim 1, **characterized in that** the vacuum is applied prior to expansion of the building drum.

3. Method according to Claim 1, **characterized in that** the vacuum is terminated at the latest after rolling down of the side wall profiles, in particular after turning up of the excess length (9a).

4. Device for building a tyre carcass of a tyre blank, which comprises an inner lining (8), at least one carcass ply (9), bead cores and portions of the carcass ply (9) turned up therearound and forming turn-ups, the device comprising a radially expandable tyre building drum consisting of a plurality of segments (1) and bellows supports (5) arranged laterally of said building drum and having inflatable bellows (6), **characterized in that**, in the shoulders (4) of the segments (1) of the tyre building drum, a number of through-bores (7) is provided at least at the edge areas of the segments (1), axially inside the shoulder-side rounded areas, which bores (7) are connected to at least one vacuum pump.

5. Device according to Claim 4, **characterized in that** at least some of the bores (7) extend perpendicularly to the axis of rotation (3) of the building drum.

6. Device according to Claim 4, **characterized in that** at least some of the bores (7) extend obliquely relative to the axis of rotation (3) and into the rounded shoulder areas.

## Revendications

1. Procédé de montage d'une carcasse d'ébauche de pneu sur un tambour de montage de pneu constitué de plusieurs segments (1) radialement expansibles, rétractables et déployables par recours à deux porte-soufflets (5) disposés sur ces segments et portant des soufflets gonflables (6) et d'une âme intérieure (8), dans lequel au moins une garniture de carcasse (9) dont les bords s'étendent au-delà des bords latéraux du tambour de montage est placée sur le tambour de montage de pneu, le tambour de montage est expansé, les débords sont éventuellement roulés, des âmes de bourrelet préfabriquées sont placées sur les bords et les débords sont rabattus par gonflement du soufflet (6), **caractérisé en ce qu'**après la pose des garnitures de carcasse (9) sur les côtés extérieurs des épaulements (4) des segments (1) du tambour de montage de pneu, une dépression est créée par l'intermédiaire d'alésages (7) au moins sur les bordures des segments (1), du côté axialement intérieur aux arrondis des épaulements, et cette dépression est maintenue au moins pendant l'expansion du tambour de montage.

2. Procédé selon la revendication 1, **caractérisé en ce que** la dépression est appliquée avant l'expansion du tambour de montage.

3. Procédé selon la revendication 1, **caractérisé en ce que** la dépression est arrêtée au plus tard après le roulement des profils de paroi latérale et en particulier après le rabattement des débords (9a).

4. Dispositif de montage de la carcasse d'une ébauche de pneu qui présente une âme intérieure (8), au moins une garniture de carcasse (9), des âmes de bourrelet et des parties de la garniture de carcasse (9) rabattues qui forment des rabats vers le haut, le dispositif présentant un tambour de montage de pneu constitué de plusieurs segments (1) radialement expansibles et de porte-soufflets (5) disposés latéralement par rapport à ces segments et portant des soufflets gonflables (6), **caractérisé en ce que** plusieurs perforations (7) reliées à au moins une pompe à vide sont prévues sur les épaulements (4) des segments (1) du tambour de montage de pneu, au moins sur les bordures des segments (1) et axialement à l'intérieur des arrondis situés du côté des épaulements.

5. Dispositif selon la revendication 4, **caractérisé en ce qu'**au moins une partie des alésages (7) s'étend perpendiculairement à l'axe de rotation (3) du tambour de montage.

6. Dispositif selon la revendication 4, **caractérisé en ce qu'**au moins une partie des alésages (7) s'étend obliquement par rapport à l'axe de rotation (3) dans les arrondis des épaulements.
